# EUROPEAN PATENT SPECIFICATION

(11) **EP 1 553 128 B1**
(45) Date of publication and mention of the grant of the patent: **21.02.2007**
(21) Application number: 03738590.3
(22) Date of filing: 30.06.2003
(51) Int. Cl.: C08J 9/12

(54) **FOAMED INJECTION MOLDED ITEM AND METHOD OF FOAM INJECTION MOLDING**
VERSCHÄUMTER SPRITZGEGOSSENER GEGENSTAND UND SCHAUMSPRITZGIESSVERFAHREN
ARTICLE MOUSSE MOULE PAR INJECTION DE MOUSSE ET PROCEDE DE MOULAGE PAR INJECTION DE MOUSSE

(30) Priority: 01.07.2002 JP 2002192344
(43) Date of publication of application: 13.07.2005
(73) Proprietor: Polyplastics Co., Ltd., Tokyo 108-8280 (JP)
(72) Inventor: MIYAZAKI, Hirotaka, Fuji-shi, Shizuoka 416-8533 (JP)
(74) Representative: Peel, James Peter
(86) International application number: PCT/JP2003/008288
(87) International publication number: WO 2004/003065

(56) References cited:
- JP-A- 7 070 349
- JP-A- 7 126 481
- JP-A- 7 165 936
- JP-A- 2003 049 015
- PATENT ABSTRACTS OF JAPAN vol. 2002, no. 08, 5 August 2002 (2002-08-05) & JP 2002 096348 A (ASAHI KASEI CORP), 2 April 2002 (2002-04-02)

## Description

### Technical Field

The present invention relates to a foamed injection molded article obtained by foam-injection-molding a specified polyacetal copolymer resin by use of a fluid in a supercritical state as a foaming agent and a foam injection molding method.

### Background art

Recently, from the standpoints of safety and environmental problems, methods of foam-molding thermoplastic resins using inert gases such as carbon dioxide gas and nitrogen as a foaming agent have been proposed. However, those inert gases have low solubility to the resin, and therefore, cell sizes of a foam body are large and liable to become uneven, and the gases have been insufficient in terms of appearance, mechanical strength, heat insulation, and so on.

An extrusion foam molding method for obtaining a foam molded body in which fine cells having sizes of 2 to 25 µm are evenly dispersed is described in US Patent No. 4,473,665. In this technology, first, the inert gas is impregnated under pressure until saturated in a sheet made of the thermoplastic resin. Subsequently, the sheet is heated up to a glass transition temperature of the thermoplastic resin, then cell nuclei are produced by reducing the pressure to bring the gas impregnated in the resin into a supersaturated state, and growth of cells is controlled by rapidly cooling. Alternatively, a method involving: producing the cell nuclei by precedently heating and melting the thermoplastic resin in which the inert gas is saturated under pressure to shape it under pressure and subsequently cooling and reducing pressure; and then controlling the cell sizes by cooling is disclosed.

In injection molding where a foam molded article is obtained by dissolving supercritical nitrogen as a foaming agent in a resin, during or after filling of the resin in a mold cavity, cells are generated.

Note that, in a polyacetal resin, a crystallization rate is fast, and thus, heat is dissipated by the mold during a step of filling the resin in the mold, so crystallization progresses, at the same time a viscosity of the resin increases. When the viscosity of the resin increases, a large force is required for removing the resin when the cells are generated, and the foams become difficult to generate. When the number of generated cells is small, a volume per bubble increases, the cells become large, and stress is concentrated to cell portions of a molded article to reduce physical properties, particularly toughness.

In JP 7-126481 A, there is a description concerning an injection molded body excellent in weather resistance, where a weather (light) resistant stabilizing agent is mixed with a polyacetal copolymer resin with a crystallization time of 5 minutes or more. However, no foam molded body obtained by injection molding a composition impregnated with a fluid in a supercritical state as a foam agent is described.

In JP 7-165936 A, there is a description concerning a polyacetal copolymer molded body which substantially has no skin layer, and is molded in a metal mold whose surface is coated by 0.01 to 2 mm with an adiabatic layer composed of a heat resistant polymer with a thermal conductivity of 0.002 cal/cm sec °C (0.84 W/m·K) or less. However, this is the description concerning a melting point, a thickness of the skin layer, and an accuracy of gearwheels in the molded body obtained by usual injection molding, but is not the invention concerning the foam molded body obtained by injection molding using the fluid in a supercritical state as the foaming agent, and particularly surface roughness of the foamed article and effects of the crystallization time are not described.

It is an object of the present invention to provide a foamed injection molded article with excellent mechanical properties and low surface roughness by use of a polyacetal resin, and a molding method thereof.

### Disclosure of the Invention

The inventor of the present invention has found that many fine cells are uniformly generated in a molded article by use of polyacetal with a crystallization time of 5 minutes or more, for example, a polyacetal copolymer containing an oxyalkylene unit having 2 or more carbon atoms at 3 to 30% by weight when injection-molding a resin impregnated with a fluid in a supercritical state as a foaming agent and the above problems can be solved. The inventor has further found that when molding the above resin using a mold made of a material showing a thermal conductivity of 5 W/m·K or less in at least a part on a surface of a cavity side, the molded article is considerably alleviated in terms of surface roughness, and has completed the present invention.

That is, according to a first aspect of the present invention, there is provided a foamed injection molded article comprising being obtained by injection-molding a resin composition in which a polyacetal copolymer resin (A) with a crystallization time of 5 minutes or more is impregnated with a fluid (B) in a supercritical state as a foaming agent.

According to a second aspect of the present invention, in the foamed injection molded article according to the first aspect of the present invention, the polyacetal copolymer resin (A) has an oxymethylene unit as a main constitutional unit and contains an oxyalkylene unit having 2 or more carbon atoms at 3 to 30% by weight.

According to a third aspect of the present invention, in the foamed injection molded article according to the second aspect of the present invention, a copolymerization monomer giving the oxyalkylene unit having 2 or more carbon atoms is at least one selected from the group consisting of ethylene oxide, 1,3-dioxolan, diethyleneglycol formal, 1,3-propanediol formal, 1,4-butanediol formal, 1,5-pentanediol formal, and 1,6-hexanediol formal.

According to a fourth aspect of the present invention, in the foamed injection molded article according to any one of the first to third aspects of the present invention, a melt index of the polyacetal copolymer resin is 2 to 30 g/10 minutes.

According to a fifth aspect of the present invention, in the foamed injection molded article according to any one of the first to fourth aspects of the present invention, the fluid (B) is nitrogen and/or carbon dioxide.

According to a sixth aspect of the present invention, in the foamed injection molded article according to any one of the first to fifth aspects of the present invention, injection molding is performed using a mold at least a part of which is made of a material having a thermal conductivity of 5W/m·K or less.

According to a seventh aspect of the present invention, there is provided a method of molding a foamed injection molded article, including injection-molding a resin composition in which a polyacetal copolymer resin (A) with a crystallization time of 5 minutes or more is impregnated with a fluid (B) in a supercritical state as a foaming agent using a mold made of a material having a thermal conductivity of 5W/m·K or less in at least a part of a cavity surface.

### Best Mode for carrying out the Invention

Embodiment modes of the present invention are illustrated below.

### Polyacetal copolymer resin (A)

A polyacetal copolymer resin (A) used in the present invention has a crystallization time of 5 minutes or more, preferably 10 to 60 minutes, and particularly preferably 15 to 30 minutes.

The crystallization time referred to in the present invention refers to a time from a start of retention until when the apex of an exothermic peak is reached due to crystallization when the polyacetal copolymer resin (A) is retained at 200°C for 5 minutes, after which a temperature is lowered down to 152°C at a rate of 10°C/minute and kept at 152°C using a differential scanning calorimeter (hereinafter referred to as DSC), and means that the shorter the crystallization time is, the higher a crystallization rate.

When the crystallization time of the polyacetal copolymer resin (A) is shorter than 5 minutes, heat is dissipated from a mold in a step of filling the resin in the mold, and thus the crystallization proceeds as well as a viscosity of the resin increases. When the viscosity of the resin increases, a large force is required for removing the resin when the cells are generated, and the foams become difficult to generate. When fewer cells are generated, a volume per unit bubble increases, in other words, the bubble becomes large, and there are problems in that stress is concentrated to cell portions of a molded article to reduce physical properties, particularly toughness.

The polyacetal copolymer resin (A) according to the present invention is obtained in such a manner that allows a polyoxymethylene backbone to randomly contain an oxyalkylene unit having 2 or more carbon atoms at 3 to 30% by weight. When the amount of the oxyalkylene unit is less than 3% by weight, the crystallization rate is too high, whereas when the amount is more than 30% by weight, the crystallization rate is too low and thus the sufficient crystallization is not obtained by a usual molding method, leading to insufficient physical properties and the like.

Examples of a copolymerization monomer giving the oxyalkylene unit having 2 or more carbon atoms include ethylene oxide, 1,3-dioxolan, diethyleneglycol formal, 1,3-propanediol formal, 1,4-butanediol formal, 1,5-pentanediol formal, and 1,6-hexanediol formal and so on. Those copolymerization monomers may be used alone or in mixture with two or more.

A melt index (a value measured at 190°C with a load of 2,160 g according to ASTM-D1238 (unit: g/10 minutes), hereinafter referred to as MI) of the above polyacetal copolymer resin (A) is not particularly limited, but in terms of moldability it is desirable to be 2 to 30 g/10 minutes and preferably 4.5 to 14 g/10 minutes. When the MI is smaller than 2 g/10 minutes, a resin viscosity in a mold cavity is high even when the crystallization rate is low, and foam is restricted. Meanwhile, when the MI is larger than 30 g/10 minutes, a foam state is preferable, but undesirably, the resin itself is fragile and a molded article becomes extremely fragile due to reduction of toughness by the foam.

### Fluid (B)

In the present invention, a fluid (B) such as nitrogen, carbon dioxide, or a mixture thereof is used as a foaming agent after impregnating the fluid in a supercritical state in the resin. With nitrogen, a critical pressure is 33.5 kg/cm² (3.28 MPa) and a critical temperature is - 147°C, and with carbon dioxide, the critical pressure is 75.3 kg/cm² (7.38 MPa) and the critical temperature is 31.4°C.

Depending on a type of the resin, when carbon dioxide and nitrogen are combined, it is easier to make cells finer and denser. A mixture ratio of carbon dioxide/nitrogen is selected from a range of 95/5 to 5/95 in terms of volume ratio in accordance with the purpose.

### Minor foaming agent

In the present invention, if necessary, as a minor foaming agent to make the foam uniform, it is also possible to combine a pyrolytic foaming agent which produces carbon dioxide or nitrogen by thermal degradation with a supercritical foaming agent. Examples of the pyrolytic foaming agent include azodicarbonamide, N,N-dinitrosopenta-tetramine, azobisisobutyronitrile, citric acid, and sodium bicarbonate and so on. An addition amount of the minor foaming agent is 0.001 to 10 parts by weight based on 100 parts by weight of the resin.

### Foam stabilizer

In the present invention, if necessary, to control cell sizes with a view to producing fine cells, various foam stabilizers may be added to the resin. The foam stabilizers include organopolysiloxane or aliphatic carboxylic acids and derivatives thereof.

Organopolysiloxane includes polydimethylsiloxane, polydiphenylsiloxane, polymethylphenylsiloxane, polymethylhydrogensiloxane, and modified organopolysiloxane where the organopolysiloxane is modified with an epoxy group-containing compound, an amino group-containing compound, an ester bond-containing compound and the like. Aliphatic carboxylic acids and the derivatives thereof include aliphatic carboxylic acids, acid anhydride, alkali metal salts, alkali earth metal salts, and fluoroalkane ester. Examples of the aliphatic carboxylic acids include lauric acid, stearic acid, crotonic acid, oleic acid, maleic acid, glutaric acid, and montanic acid. The fluoroalkane ester groups include fluoroalkane ester groups having fluoroalkane groups with 3 to 30 carbon atoms, and include fluoroalkane esters of stearic acid, montanic acid and the like. Those may be used in mixture with two or more. The addition amount of the foam stabilizer is 0.01 to 10 parts by weight base on 100 parts by weight of the resin.

### Foam nucleating agent

In the present invention, if necessary, inorganic fine powder or organic powder may be added as a foam nucleating agent.

The inorganic fine powder includes, for example, talc, calcium carbonate, clay, magnesium oxide, zinc oxide, glass beads, glass powder, titanium oxide, carbon black, and silica anhydride and so on. A particle size of the foam nucleating agent is preferably 100 µm or less, and particularly preferably 5 µm or less.

The addition amount of the foam nucleating agent is 0.001 to 10 parts by weight based on 100 parts by weight of the resin.

### Other additives

In the present invention, depending on the purpose, plasticizers, lubricants, stabilizers, fillers, reinforcers, coloring agents and the like may be added to the resin.

### Injection molding machine unit

An injection molding machine unit used in the present invention is not particularly limited so long as a fluid for foam can be impregnated in the resin by kneading it in a supercritical state, and includes a screw inline type, a screw pre-plasticizer type, a plunger type and the like.

In the injection molding machine unit, the resin is supplied from a hopper, and the foaming agent is introduced as the resin is heated and melted with kneading to form a resin composition in a state where the molten resin is impregnated with the supercritical foaming agent. It is preferred that in the injection molding machine unit, a pressure and temperature condition to a nozzle be retained at a supercritical state equal to or more than the critical pressure and critical temperature of the foaming agent fluid and at higher temperature and pressure than those of the resin in a sprue.

A method of impregnating the foaming agent in the molten resin in the injection molding machine unit is not particularly limited, and examples thereof include a method of injecting the foaming agent in a gaseous state under pressure, a method of injecting the foaming agent in a liquid state by a plunger pump, and a method of injecting the foaming agent in a supercritical state.

### Mold for injection molding

A mold for injection molding of the present invention is not particularly limited.

For example, by use of a sprue and a runner with small size where effective sizes Lm of the sprue and the runner provided if necessary except for a gate section are 1.0 to 1.7 times a nozzle diameter Ln of the injection molding machine unit, it becomes possible to inhibit the foam in the sprue and the runner when the resin composition in which the supercritical foaming agent is impregnated in the resin is filled in a cavity via the sprue, the runner and the gate of the mold by the injection molding unit. That is, when the resin composition is injected from the injection unit into the mold, the pressure is released and the foam is started, but if employing the sprue and the runner in this range, a release section of the pressure is small, and thus the foam is not facilitated in the sprue and the runner.

In the present invention, the sprue may be connected to the runner, or may be directly connected to the gate without providing the runner.

In the present invention, the sprue may have a uniform diameter, but it is preferred that the diameter on a nozzle side be small and the diameter gradually becomes larger toward the runner or toward the gate. When the runner is provided, the runner may have the uniform diameter, but it is also possible to gradually increase the diameter toward the gate.

In the present invention, when the resin composition in which the polyacetal copolymer resin (A) with a crystallization time of 5 minutes or more is impregnated with the fluid (B) in a supercritical state as the foaming agent is injection-molded, the usual metal mold can be used, but by use of the mold at least a part of which is made of a material having the thermal conductivity of 5 W/m·K or less, preferably 4 to 0.1 W/m·K, it is possible to obtain the molded article where surface roughness of an injection molded article and variation thereof are extremely low.

Thus, it is possible to use, for example, the mold where the surface of the mold cavity is coated with the material having the thermal conductivity of 5 W/m·K or less, e.g., a heat resistant resin, particularly a fluorine resin excellent in heat resistance and mold releasability from the filled resin. When the mold surface is coated using the heat resistant resin, a thickness of a resin layer is 0.01 to 2 mm, preferably 0.1 to 1 mm. A coated face of the mold may be a fixing mold side or a moving mold side or both, or otherwise, a necessary part thereof.

### Manufacture of resin composition

In the present invention, the above resin and if necessary the foam stabilizer, the foam nucleating agent and the other additives may be simultaneously added from the hopper of the injection molding machine unit, or a composition may be precedently manufactured by a melting/kneading method using a mixer, a mixing roll, a kneader, a Brabender and the like.

A resin composition for foam injection molding is obtained by adding the foaming agent under pressure to the molten resin or a resin composition to which the foam stabilizer and so on is added. Specifically, for example, nitrogen and/or carbon dioxide filled in a bomb is supplied by applying pressure with a pump and if necessary raising temperature into the molten resin in a cylinder of the injection molding machine.

A ratio of the foaming agent is in the range where the foaming agent can be saturated and impregnated in the resin, and although it depends on the type of resin, temperature and pressure, the ratio of the foaming agent is 0.01 to 25 parts by weight, preferably 0.05 to 20 parts by weight based on 100 parts by weight of the resin.

The resin composition impregnated with the foaming agent is retained at, for example 50 to 350 kg/cm² (4.9 to 34.3 MPa), preferably 100 to 300 kg/cm² (9.8 to 29.4 MPa); 90 to 400°C, preferably 100 to 300°C in the cylinder of the injection molding machine unit.

In the cylinder, the resin temperature can be also lowered to the temperature suitable for foaming at the side close to the nozzle, or if necessary, a supersaturation state can be also made.

In a foam molded article of the present invention, an average size of cells is 1 to 60 µm, preferably 1 to 50 µm, a maximum size of the cells is 100 µm or less, preferably 80 µm or less, a uniform foaming state is exhibited, and many foaming sections do not appear in the surface with smooth surface.

In particular, by use of the mold where at least a part of the mold cavity is made of the material having the thermal conductivity of 5 W/m·K or less, it is possible to obtain the molded article where the surface roughness of the injection molded article is 3 µm or less, preferably 2.0 µm or less and the variation thereof is 0.3 µm or less, preferably 0.2 µm or less.

### Examples

Hereinafter, the present invention is more specifically illustrated by examples, but the present invention is not limited by these examples.

### [Example 1]

By using a continuous mixing reactor composed of a barrel having a shape where two circles are partially overlapped in cross section and attached with a jacket for running a heating (cooling) medium outside, and rotational axes with paddles, with rotating two rotational axes with paddles at 150 rpm, 6 parts by weight of 1,3-dioxolan was added as a copolymerization monomer to 100 parts by weight of trioxane, further methylal was continuously supplied as a molecular weight adjuster, and boron trifluoride as a catalyst was continuously added/supplied at 0.005% by weight based on trioxane to perform bulk polymerization.

As a reaction product discharged from a polymerization reactor was quickly passed through a pulverizer, it was added to an aqueous solution containing 0.05% by weight of triethylamine at 60°C to deactivate the catalyst. Furthermore, after separation, washing and drying, a crude polyacetal copolymer was yielded.

Then, 4 parts by weight of an aqueous solution of 5% by weight of triethylamine and 0.3 parts by weight of pentaerythritol-tetrakis[3-(3,5-di-tert-butyl-4-hydroxyphenyl) propionate] were added to 100 parts by weight of the crude polyacetal copolymer, and melted/kneaded at 210°C by a biaxial extruder to eliminate unstable portions. For the resulting polyacetal copolymer, a copolymer composition thereof was identified by ¹H-NMR measurement using hexafluoroisopropanol-d₂ as a solvent, and a total terminal group amount was quantified by peak areas corresponding to respective termini.

As stabilizers, 0.03 parts by weight of pentaerythrityl-tetrakis[3-(3,5-di-tert-butyl-4-hydroxyphenyl)propionate] and 0.15 parts by weight of melamine were added to 100 parts by weight of the obtained polyacetal copolymer and melted/kneaded at 210°C by a biaxial extruder to yield a pellet polyacetal resin composition. The crystallization time and MI of this resin were 15 minutes and 9 g/10 minutes, respectively.

Using this resin, in a mold with a thickness of 2.0 mm for ISO dumbbell test, the temperature of a cylinder of an injection unit was set at 190°C, the temperature of the mold was set at 80°C, nitrogen at 10 MPa and 40°C was injected as a foaming agent in a plasticization unit, measurements of the resin were changed, and injection molding was performed with gradually reducing the resin injected in the cavity.

As a result, the weight of a foam molded article was 10% lighter than the weight of a non-foam molded article obtained under the same molding condition without using the foaming agent (in Table 1, shown as a rate of weight decrease, the same applies the following). Tensile strength was 45 MPa, tensile elastic modulus was 880 MPa, tensile elongation was 60%, surface roughness in a perpendicular direction to a fluid flow direction around a fluid flow end was 5.5 µm, and favorable physical properties were shown. For variation (maximum - minimum) of the physical properties in 5 samples, the tensile strength was 3 MPa, the tensile elastic modulus was 20 MPa and the tensile elongation was 3%, which are extremely small, and the article can be significantly applied to mechanism parts where the physical properties are important.

Furthermore, the surface roughness in a perpendicular direction to a fluid flow direction around the fluid flow end (10-points average roughness according to JIS B0601) was 4.5 µm, and the variation of 5 samples was 0.3 µm which was small, and it is possible to significantly apply to mechanism parts which do not give importance to the surface roughness. Meanwhile, when the article was broken at an arbitrary point between gages and cells at a broken face were checked, many cells were generated and the relatively uniform cells with a maximum size of 50 µm were observed.

### [Example 2]

The same polymerization and molding methods as those in Example 1 were carried out except that an addition amount of 1,3-dioxolan which was the copolymerization monomer was changed to 5 parts by weight.

The crystallization time and MI of the resin were about 5 minutes and 9 g/10 minutes.

As a result, in the molded article obtained by sufficiently transferring the mold, 10% weight was reduced, the tensile strength was 42 MPa, the tensile elastic modulus was 860 MPa, the tensile elongation was 48%, and thus favorable physical properties were shown. For the variation of 5 samples, the tensile strength was 4 MPa, the tensile elastic modulus was 40 MPa, and the tensile elongation was 4%, which are significantly small, and the article can be applied to mechanism parts where the physical properties are important.

Furthermore, the surface roughness in the direction perpendicular to the fluid flow direction around the fluid flow end was 4.7 µm, the variation of 5 samples was 0.4 µm which is small, and the article can be significantly applied to mechanism parts which do not give importance to the surface roughness. Meanwhile, when the article was broken at an arbitrary point between gages and cells at a broken face were checked, many cells were generated and the relatively uniform cells with a maximum size of 70 µm were observed.

### [Example 3]

A molded article was obtained by the same materials and molding method as those in Example 1 except that the surface at a fixing side of a mold cavity was coated with Teflon sheet PFA-500LP available from DuPont (thickness: 125 µm, thermal conductivity: 0.2 W/m·K). As a result, the surface roughness in the direction perpendicular to the fluid flow direction around the fluid flow end at the side coated with the Teflon sheet was 1.5 µm, the variation of 5 samples was 0.1 µm which was small, and the article can be also significantly applied to mechanism parts which give importance to the surface roughness.

### [Example 4]

A molded article was obtained by the same materials and molding method as those in Example 2 except that the surface at a fixing side of a mold cavity was coated with Teflon sheet PFA-500LP available from DuPont (thickness: 125 µm, thermal conductivity: 0.2 W/m·K). As a result, the surface roughness in the direction perpendicular to the fluid flow direction around the fluid flow end at the side coated with the Teflon sheet was 2.0 µm, the variation of 5 samples was 0.2 µm which was small, and the article can be also significantly applied to mechanism parts which give importance to the surface roughness.

### [Comparative Example 1]

The same polymerization and molding methods as those in Example 1 were carried out except that the addition amount of 1,3-dioxolan which was a copolymerization monomer was changed to 3.4 parts by weight.

The crystallization time and MI of this resin were about 2 minutes and 9 g/10 minutes, respectively.

As a result, in the molded article obtained by sufficiently transferring the mold, 10% of the weight was reduced, the tensile strength was 36 MPa, the tensile elastic modulus was 780 MPa, and the tensile elongation was 25%. In particular, the elongation was poor, and thus there was a problem in physical properties.

For the variation of 5 samples, the tensile strength was 8 MPa, the tensile elastic modulus was 120 MPa, and the tensile elongation was 10%, which were large, and it is difficult to apply to mechanism parts where the physical properties are important. Furthermore, the surface roughness in the direction perpendicular to the flow direction around the fluid flow end was 8.0 µm, the variation of 5 samples was 0.8 µm which was large, and the article is limited to the application only to molded articles which are not affected at all by the surface roughness.

Meanwhile, when the article was broken at an arbitrary point between gages and cells at a broken face were observed, a few cells were observed and the large cells with a maximum size of about 150 µm were observed.

### [Comparative Example 2]

A molded article was obtained by the same material and molding method as those in Comparative Example 1 except that the surface at a fixing side of a mold cavity was coated with Teflon sheet PFA-500LP available from DuPont (thickness: 125 µm, thermal conductivity: 0.2 W/m·K).

As a result, the surface roughness in the direction perpendicular to the fluid flow direction around the fluid flow end at the side coated with the Teflon sheet was 6.0 µm, the variation of 5 samples was 0.3 µm which became smaller than the usual mold portion but was not sufficient, and the application is limited only to the molded articles which are not affected at all by the surface roughness.

**Table 1**

| Copolymerization component | | Example | | | | Comparative Example | |
|---|---|---|---|---|---|---|---|
| | | 1 | 2 | 3 | 4 | 1 | 2 |
| 1,3-Dioxolan | Parts by weight | 6 | 5 | 6 | 5 | 3.4 | 3.4 |
| Oxyethylene unit | Weight % | 3.6 | 3.0 | 3.6 | 3.0 | 2.0 | 2.0 |
| Crystallization time | Minutes | 15 | 5 | 15 | 5 | 2 | 2 |
| MI | g/10 minutes | 9 | 9 | 9 | 9 | 9 | 9 |
| Melting point | °C | 160 | 161 | 160 | 161 | 163 | 163 |
| Weight decrease | % | 10 | 10 | 10 | 10 | 10 | 10 |
| Maximum cell size | µm | 50 | 70 | 50 | 70 | 150 | 150 |
| Tensile strength | MPa | 45 | 42 | 45 | 42 | 36 | 36 |
| (Variation) | | (3) | (4) | (3) | (4) | (8) | (8) |
| Tensile elastic modulus | MPa | 880 | 860 | 880 | 860 | 780 | 780 |
| (Variation) | | (20) | (40) | (20) | (40) | (120) | (120) |
| Tensile elongation | % | 60 | 48 | 60 | 48 | 25 | 25 |
| (Variation) | | (3) | (4) | (3) | (4) | (10) | (10) |
| Surface roughness | µm | 4.5 | 4.7 | 1.5 | 2.0 | 8.0 | 6.0 |
| (Variation) | | (0.3) | (0.4) | (0.1) | (0.2) | (0.8) | (0.3) |

### Industrial Applicability

According to the present invention, it is possible to obtain a foamed injection molded article made of a polyacetal copolymer, which has many uniform cell structures, and is excellent in mechanical properties and small in surface roughness.

Also, by coating the mold surface with the material having the thermal conductivity of 5 W/m·K or less, the surface roughness was remarkably improved, and its degree was a surprising result which copolymer resins out of the scope of the present invention could not attain.

## Claims

1. A foamed injection molded article, which is obtained by injection-molding a resin composition in which a polyacetal copolymer resin (A) with a crystallization time of 5 minutes or more is impregnated with a fluid (B) in a supercritical state as a foaming agent.

2. The foamed injection molded article according to claim 1, which comprises cells with a maximum size of 100µm or less.

3. The foamed injection molded article according to claim 1 or claim 2, wherein the polyacetal copolymer resin (A) has an oxymethylene unit as a main constitutional unit and contains an oxyalkylene unit having 2 or more carbon atoms at 3 to 30% by weight.

4. The foamed injection molded article according to any one of claims 1 to 3, wherein a copolymerization monomer which gives the oxyalkylene unit having 2 or more carbon atoms comprises at least one selected from the group consisting of ethylene oxide, 1,3-dioxolan, diethyleneglycol formal, 1,3-propanediol formal, 1,4-butanediol formal, 1,5-pentanediol formal, and 1,6-hexanediol formal.

5. The foamed injection molded article according to any one of claims 1 to 4, wherein a melt index of the polyacetal copolymer resin is 2 to 30 g/10 minutes.

6. The foamed injection molded article according to any one of claims 1 to 5, wherein the fluid (B) comprises nitrogen and/or carbon dioxide.

7. The foamed injection molded article according to any one of claims 1 to 6, wherein the injection molding is performed using a mold made of a material having a thermal conductivity of 5 W/m.K or less in at least a part of a surface on a cavity side.

8. A method of molding a foamed injection molded article, comprising injection-molding a resin composition in which a polyacetal copolymer resin (A) with a crystallization time of 5 minutes or more is impregnated with a fluid (B) in a supercritical state as a foaming agent using a mold made of a material having a thermal conductivity of 5 W/m.K or less in at least a part of a surface on a cavity side.

## Patentansprüche

1. Schaumstoffspritzgussgegenstand, der durch Spritzgießen einer Harzzusammensetzung erhalten wird, wobei ein Polyazetal-Kopolymerharz (A) mit einer Kristallisationszeit von 5 Minuten oder mehr mit einem Fluid (B) in einem überkritischen Zustand als Schaumbildner imprägniert wird.

2. Schaumstoffspritzgussgegenstand nach Anspruch 1,
**dadurch gekennzeichnet, dass** er Zellen mit einer Maximalgröße von 100µm oder weniger aufweist.

3. Schaumstoffspritzgussgegenstand nach Anspruch 1 oder 2,
**dadurch gekennzeichnet, dass**
das Polyazetal-Kopolymerharz (A) eine Oxymethyleneinheit als einen Hauptbestandteil bildende Einheit aufweist und eine Oxyalkyleneinheit mit 2 oder mehr Kohlenstoffatomen bei 3 bis 30 Gewichts-% enthält.

4. Schaumstoffspritzgussgegenstand nach einem der Ansprüche 1 bis 3,
**dadurch gekennzeichnet, dass**
ein Kopolymerisationsmonomer, welches die Oxymethyleneinheit mit 2 oder mehr Kohlenstoffatomen ergibt, mindestens ein aus der aus Ethylenoxid, 1,3-Dioxolan, Diethylenglykolformal, 1,3-Propandiolformal, 1,4-Butandiolformal, 1,5-Pentandiolformal und 1,6-Hexandiolformal bestehenden Gruppe ausgewähltes Element umfasst.

5. Schaumstoffspritzgussgegenstand nach einem der Ansprüche 1 bis 4,
**dadurch gekennzeichnet, dass**
ein Schmelzindex des Polyazetal-Kopolymerharzes 2 bis 30 g/10 Minuten beträgt.

6. Schaumstoffspritzgussgegenstand nach einem der Ansprüche 1 bis 5,
**dadurch gekennzeichnet, dass**
das Fluid (B) Stickstoff und/oder Kohlendioxid umfasst.

7. Schaumstoffspritzgussgegenstand nach einem der Ansprüche 1 bis 6,
**dadurch gekennzeichnet, dass**
das Spritzgießen unter Verwendung einer Gießform ausgeführt wird, die aus einem Werkstoff hergestellt ist, der eine Wärmeleitfähigkeit von 5 W/mK oder weniger in mindestens einem Teil der Oberfläche auf einer Hohlraumseite aufweist.

8. Verfahren zum Gießen eines Schaumstoffspritzgussgegenstandes, welches Spritzgießen einer Harzzusammensetzung umfasst, wobei ein Polyazetal-Kopolymerharz (A) mit einer Kristallisationszeit von 5 Minuten oder mehr mit einem Fluid (B) in einem überkritischen Zustand als Schaumbildner imprägniert wird, wobei es unter Verwendung einer Gießform ausgeführt wird, die aus einem Werkstoff hergestellt ist, der eine Wärmeleitfähigkeit von 5 W/mk oder weniger in mindestens einem Teil der Oberfläche auf einer Hohlraumseite aufweist.

## Revendications

1. Un article expansé moulé par injection, qui est obtenu en moulant par injection une composition de résine dans laquelle une résine de copolymère polyacétal (A) ayant un temps de cristallisation de 5 minutes ou plus est imprégnée d'un fluide (B) dans un état surcritique comme agent moussant.

2. L'article expansé moulé par injection selon la revendication 1, qui comprend des cellules ayant une taille maximale de 100 µm ou moins.

3. L'article expansé moulé par injection selon la revendication 1 ou la revendication 2, dans lequel la résine de copolymère polyacétal (A) possède un motif oxyméthylène comme principal motif constitutif et contient un motif oxyalkylène ayant au moins 2 atomes de carbone en une quantité de 3 à 30 % en poids.

4. L'article expansé moulé par injection selon l'une quelconque des revendications 1 à 3, dans lequel un monomère de copolymérisation qui donne le motif oxyalkylène ayant au moins 2 atomes de carbone comprend au moins un composé choisi dans le groupe formé par l'oxyde d'éthylène, le 1,3-dioxolanne, le diéthylèneglycol-formal, le 1,3-propanediol-formal, le 1,4-butanediol-formal, le 1,5-pentanediol-formal et le 1,6-hexanediol-formal.

5. L'article expansé moulé par injection selon l'une quelconque des revendications 1 à 4, dans lequel l'indice de fluidité à chaud de la résine de copolymère polyacétal est de 2 à 30 g/10 minutes.

6. L'article expansé moulé par injection selon l'une quelconque des revendications 1 à 5, dans lequel le fluide (B) comprend de l'azote et/ou du dioxyde de carbone.

7. L'article expansé moulé par injection selon l'une quelconque des revendications 1 à 6, dans lequel le moulage par injection est effectué en utilisant un moule constitué d'un matériau ayant une conductivité thermique de 5 W/m.K ou moins dans au moins une partie d'une surface sur une face de cavité.

8. Procédé de moulage d'un article expansé moulé par injection, comprenant le moulage par injection d'une composition de résine dans laquelle une résine de copolymère polyacétal (A) ayant un temps de cristallisation de 5 minutes ou plus est imprégnée d'un fluide (B) dans un état surcritique comme agent moussant, en utilisant un moule constitué d'un matériau ayant une conductivité thermique de 5 W/m.K ou moins dans au moins une partie d'une surface sur une face de cavité.
